# EUROPÄISCHE PATENTSCHRIFT

(11) **EP 1 440 415 B1**
(45) Veröffentlichungstag und Bekanntmachung des Hinweises auf die Patenterteilung: **06.12.2006**
(21) Anmeldenummer: 02776797.9
(22) Anmeldetag: 10.10.2002
(51) Int. Cl.: G06K 7/00, G06K 13/08

(54) **CHIPKARTEN-AUFNAHMEAGGREGAT**
CHIPCARD HOUSING UNIT
UNITE RECEPTACLE POUR CARTES A PUCE

(30) Priorität: 02.11.2001 DE 10153995
(43) Veröffentlichungstag der Anmeldung: 28.07.2004
(73) Patentinhaber: SIEMENS AKTIENGESELLSCHAFT, 80333 München (DE)
(72) Erfinder: BOLDT, Matthias, 78467 Konstanz (DE); HUG, Klaus, 78727 Oberndorf (DE)
(86) Internationale Anmeldenummer: PCT/DE2002/003818
(87) Internationale Veröffentlichungsnummer: WO 2003/040997

(56) Entgegenhaltungen:
- EP-A- 1 118 958
- DE-U- 20 018 694

## Beschreibung

Die Erfindung betrifft ein Chipkarten-Aufnahmeaggregat mit einem die Chipkarten führenden Kartenhalter und mit beim Eingeben einer Chipkarte in das Aufnahmeaggregat mittels der Chipkarte betätigbaren Verriegelungsmitteln.

Die Anwendung von Chipkarten beispielweise zur Erfassung der persönlichen Arbeits- und Ruhezeiten der Fahrer von Nutzfahrzeugen erfordert wegen des dokumentarischen Wertes dieser Aufzeichnungen zuverlässige Sicherungen zur Vermeidung von in betrügerischer Absicht erfolgenden Störungen der Datenübertragung zwischen einem Datenerfassungsgerät und einer Chipkarte. Die räumlichen Möglichkeiten, insbesondere was die Bautiefe im haptischen Bereich der Fahrer anbelangt, sind jedoch im Nutzfahrzeug erheblich eingeschränkt, so dass ein größerer Transportweg gegebenenfalls auch eine Richtungsänderung während des Transportes einer Chipkarte als Sicherheitsmaßnahme weder in einem ein entsprechendes Aufnahmeaggregat für Chipkarten beinhaltenden Fahrtschreiber noch in einer Ausführung als autonomes Chipkartenaggregat realisierbar sind. In den Fällen, in denen somit lediglich ein Vorstecken einer Chipkarte von Hand, und zwar bis an einen Anschlag in der Lese-/Schreibposition der Chipkarte möglich ist oder für einen automatischen Transport nur ein relativ kurzer Transportweg zur Verfügung steht, müssen Sicherungsmittel vorgesehen werden, die eine in dem betreffenden Aufnahmeaggregat befindliche Chipkarte frontseitig manipulationssicher verriegeln. Dabei ist, insbesondere wenn das Eingeben einer Chipkarte bis in die Lese-/Schreibposition ausschließlich von Hand erfolgt, in bezug auf die Frontfläche eines Fahrtschreibers oder eines ähnlichen Gerätes bzw. einer Einbauwand, in der ein autonomes Chipkartenaggregat verbaut ist, eine ausreichend tiefe Versenkung einer einzugebenden Chipkarte erforderlich und dementsprechend auch eine geeignete Eingabemulde vorzusehen. Die Einbausituation und die räumlichen Verhältnisse, beispielweise in einem Fahrerhaus eines Kraftfahrzeuges, machen es, abgesehen davon, dass die Sicherungsmittel auch ästhetischen Belangen genügen sollen, anderseits erforderlich, dass die Eingabemulde so breit wie möglich ausgebildet ist, um ein Eingeben einer Chipkarte auch ohne unmittelbares Beobachten der Eingabemulde, d.h. lediglich durch taktiles Orientieren vornehmen zu können. Dabei ist vorauszusetzen, dass wenn die Eingabe einer Chipkarte unter einem gewissen Winkel zur Lage der den Chipkarten in einem Aufnahmeaggregat zugeordneter Führung erfolgt, Funktionsstörungen aufgrund von Kollisionen mit den Sicherungsmitteln ausgeschlossen sind.

Bei bekannten, gattungsgemäßen Chipkarten-Aufnahmeaggregaten wie z. B. der DE 200 18 694 U ist es üblich, mittels einer einzugebenden Chipkarte Riegelelemente anzuheben oder dem Verriegeln dienende Kraftspeicher zu laden, und zwar in einem Eingabezustand der Chipkarte, in dem die Chipkarte noch nicht oder nur ungenügend geführt ist, so dass die Eingabe einer Chipkarte nur mit erhöhter Sorgfalt erfolgen kann. Solche Chipkarten-Aufnahmeaggregate sind für den angestrebten Zweck, der auch ein "blindes Eingeben" einer Chipkarte vorsieht, ungeeignet. Außerdem erfordern die bei bekannten Aufnahmeaggregaten zur Zugriffssicherung einer eingegebenen Chipkarte vorgesehenen und in Richtung der Hochachse eines Aufnahmeaggregates verschieb- oder verschwenkbaren Riegel oder Klappen einen relativ hohen Bauraum und zumindest teilweise einen erheblichen Fertigungs- und Montageaufwand. Letzterer ist, insbesondere für eine Anwendung von Chipkarten-Aufnahmeaggregaten in Nutzfahrzeugen, wo eine seriengerechte Montage von möglichst einfachen und mit vergleichsweise geringem Aufwand herstellbaren Bauteilen zu beachten ist, nicht akzeptabel.

Unter Einbeziehung der vorstehend genannten Serientauglichkeit ergibt sich somit die Aufgabe, ein Chipkarten-Aufnahmeaggregat zu schaffen, welches auch für den Nutzfahrzeugeinsatz ausreichend robust ist, eine verlässliche Funktions und Manipulationssicherheit bietet und insbesondere eine einfache und störungssichere Eingabe einer Chipkarte gestattet.

Die Lösung der gestellten Aufgabe sieht vor, dass an dem Kartenhalter ein plattenförmiger, mittels einer Chipkarte verschiebbarer Steuerschieber gelagert ist und dass der Steuerschieber getrieblich mit wenigstens einem auf dem Kartenhalter gelagerten Riegelelement in Eingriff steht, wobei das Riegelelement derart ausgebildet und gelagert ist, dass es in einer Ebene parallel zur Bewegungsebene des Steuerschiebers bewegbar ist und mit einer angeformten Zunge in die Bewegungsebene der Chipkarte eingreift.

Eine Weiterentwicklung der gefundenen Lösung ist dadurch gekennzeichnet, dass das Riegelelement als im wesentlichen flachprofiliertes Bauteil ausgebildet ist, an dessen einem Ende die Zunge angeformt ist, dass an dem Riegelelement Mittel zur Lagerung auf dem Kartenhalter vorgesehen sind und dass das Riegelelement mit einem Mitnahmestift versehen ist, welchem eine in dem Steuerschieber ausgebildete Kulisse zugeordnet ist.

Ein bevorzugtes Ausführungsbeispiel sieht vor, dass zwei Riegelelemente vorgesehen sind und dass in dem Steuerschieber ausgebildete, jeweils einem Riegelelement zugeordnete Kulissen derart gestaltet sind, dass die Riegelelemente bei einer Bewegung des Steuerschiebers gegenläufige Bewegungen ausführen, dass ferner jedem Riegelelement ein Federelement zugeordnet ist, dass außerdem das eine Ende eines Riegelelementes derart hakenartig ausgebildet ist, dass es eine in der Lese-/Schreibposition befindliche Chipkarte stirnseitig umgreift und dass jedes Riegelelement mit auf der Gegenseite des Mitnahmestiftes angebrachten Führungsstiften versehen ist und in dem Kartenhalter den Führungsstiften zugeordnete Nute ausgebildet sind derart, dass die Riegelelemente quer zur Bewegungsrichtung des Steuerschiebers bewegbar sind.

Weitere zweckmäßige Ausgestaltungen der Erfindung beschreiben die nicht zitierten Unteransprüche bzw. gehen aus der Beschreibung der Zeichnungen des gewählten Ausführungsbeispiels hervor.

Die Erfindung bietet den Vorteil einer einfachen Handhabbarkeit, d.h., dass zumindest in der Anfangsphase des Eingebens einer Chipkarte in das Aufnahmegerät lediglich ein geringer, reibungsbedingter, gegebenenfalls bewusst eingestellter Kraftbedarf bzw. Handhabungswiderstand erforderlich ist und erst dann, wenn eine einzugebende Chipkarte ausreichend gut in dem betreffenden Kartenschacht geführt ist, ein Betätigen der Riegelelemente in Richtung "Schließen" erfolgt und somit ein höherer Kraftbedarf erforderlich wird. Dabei wirken die den Riegelelementen zugeordneten Federschenkel, die im wesentlichen dem Festhalten und der Schwingungssicherung des Steuerschiebers und der Riegelelemente in den jeweiligen Endstellungen dienen, nicht jedoch für die Funktion des Verriegelungsprinzips zwingend erforderlich sind, in die gleiche Richtung, d.h. sie unterstützen den Schließvorgang. Im übrigen sei darauf hingewiesen, dass dem Steuerschieber zur Fixierung in der "Offenstellung" des Chipkarten-Aufnahmeaggregates beispielweise ein Kugelrastgesperre zugeordnet werden kann und die die Riegelelemente führenden Nute derart ausgebildet sein können, dass die Riegelelemente gegen die Stirnseite einer am Anschlag liegenden Chipkarte verschwenkt werden.

Ein weiter entscheidender Vorteil der Erfindung ist darin zu sehen, dass infolge der Bewegung der Riegelelemente in einer zur Chipkarten-Eingabeebene parallelen Ebene ein Minimum an Bauhöhe erzielbar ist, insbesondere wenn die Riegelelemente in dem Kartenhalter versenkt gelagert sind und der Steuerschieber praktisch spielfrei dem Kartenhalter zugeordnet ist. Ferner ermöglicht die erfindungsgemäße Funktion der Riegelelemente und deren Anordnung ein kollisionsfreies Eingeben einer Chipkarte in den Kartenschacht des Aufnahmeaggregates und eine relativ lange Eingabemulde, ohne dass die Riegelelemente in der Schließstellung frei zugänglich sind. Von Vorteil, insbesondere hinsichtlich Manipulationsversuchen ist im übrigen die Ausbildung der Riegelelemente derart, dass sie eine eingegebene Chipkarte hakenartig umgreifen und die Tatsache, dass die Riegelelemente im Kartenhalter zweistellig, also nicht drehbar, sondern verschiebbar gelagert sind und bei einem Versuch, ein Verschieben von außen zu erzielen, eine Selbsthemmung wirksam wird. Im Sinne der Erfindung ist selbstverständlich auch eine Lösung mit nur einem Riegelelement mit entsprechend eingeschränkter Manipulationssicherheit oder sich scheren- bzw. zangenartig bewegenden Riegelelementen denkbar, wobei letztere einen höheren Montagenaufwand und gegenüber dem gewählten Ausführungsbeispiel eine geringere Manipulationssicherheit aufweist. Die relativ lange Eingabemulde ermöglicht anderseits eine Ein-Hand-Eingabe einer Chipkarte, und zwar ohne unmittelbares Beobachten des Führungsschlitzes. Wesentlich ist außerdem, dass das Chipkarten-Aufnahmeaggregat aus relativ wenig und gut reproduzierbaren Bauteilen besteht, für deren Montage lediglich Fügeverbindungen wirksam sind, beispielweise die Riegelelemente lediglich in die im Kartenhalter vorgesehenen Aussparungen eingelegt werden müssen und dann mittelbar, d.h. nach dem Anbringen des Steuerschiebers funktionsfähig, und zwar mit hoher Funktionssicherheit gelagert sind.

Erwähnenswert ist ferner, dass die erfindungsgemäße Verriegelung in einer geeigneten Abwandlung auch bei einem Chipkarten-Aufnahmeaggregat Anwendung finden kann, bei dem die Chipkarten selbsttätig in die Lese-/Schreibposition transportiert werden.

Hinsichtlich des oben erwähnten Kraftbedarfs ist ferner von Bedeutung, dass bei der erfindungsgemäßen Lösung des Spannen der Federschenkel nicht beim Eingeben einer Chipkarte sondern beim Verschieben einer in der Lese-/Schreibposition befindlichen Chipkarte in die Entnahmeposition erfolgt, wobei nach einer Tastenbestätigung ein motorisch bewegter Stößel mit dem Steuerschieber zusammenwirkt.

Im folgenden sei die Erfindung anhand von Zeichnungen näher erläutert. Es zeigen:
- Figur 1: eine Frontansicht eines Fahrtschreibers, in welchem das erfindungsgemäße Chipkarten-Aufnahmeaggregat eingebaut ist,
- Figur 2: eine perspektivische Draufsicht des Chipkarten-Aufnahmeaggregates,
- Figur 3: eine Explosionsdarstellung der einzelnen Bauteile des Chipkarten- Aufnahmeaggregates gemäß Figur 2 in einer rück- bzw. unterseitigen Ansicht,
- Figur 4: eine Teilschnittdarstellung der Lage des Chipkarten-Aufnahmeaggregates zwischen Frontblende, Leiterplatte und Bodenblech des Fahrtschreibers,
- Figur 5: eine Untersicht des Chipkarten-Aufnahmeaggregates mit einer in der Entnahmeposition befindlichen Chipkarte,
- Figur 6: eine Untersicht des Chipkarten-Aufnahmeaggregates mit einer in der Lese-/Schreibposition befindlichen Chipkarte.

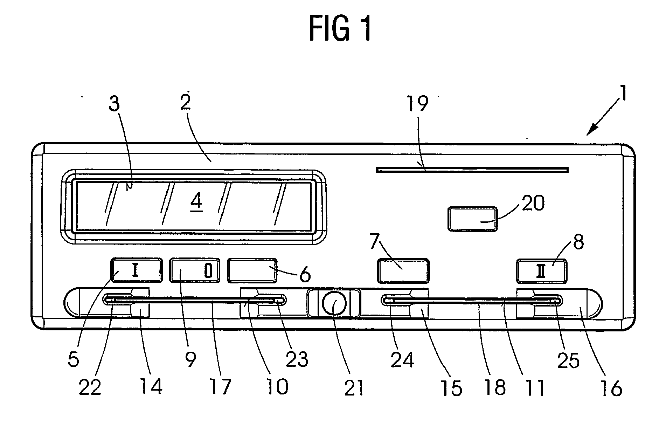

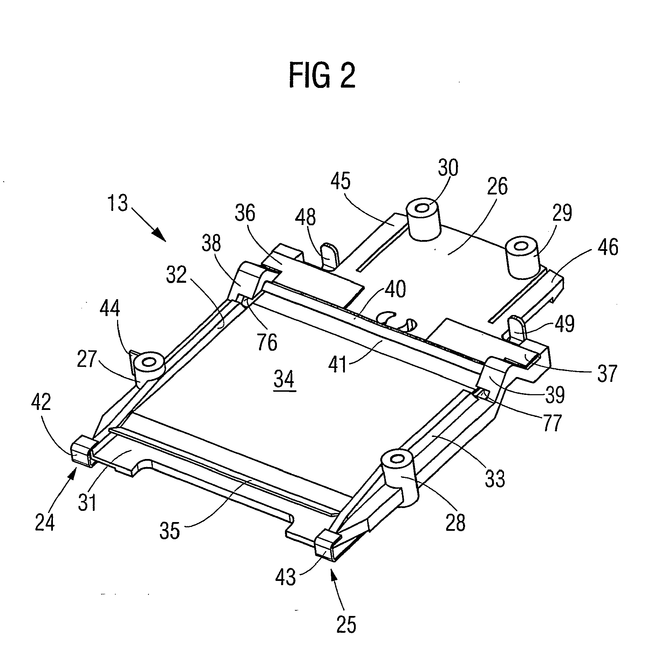

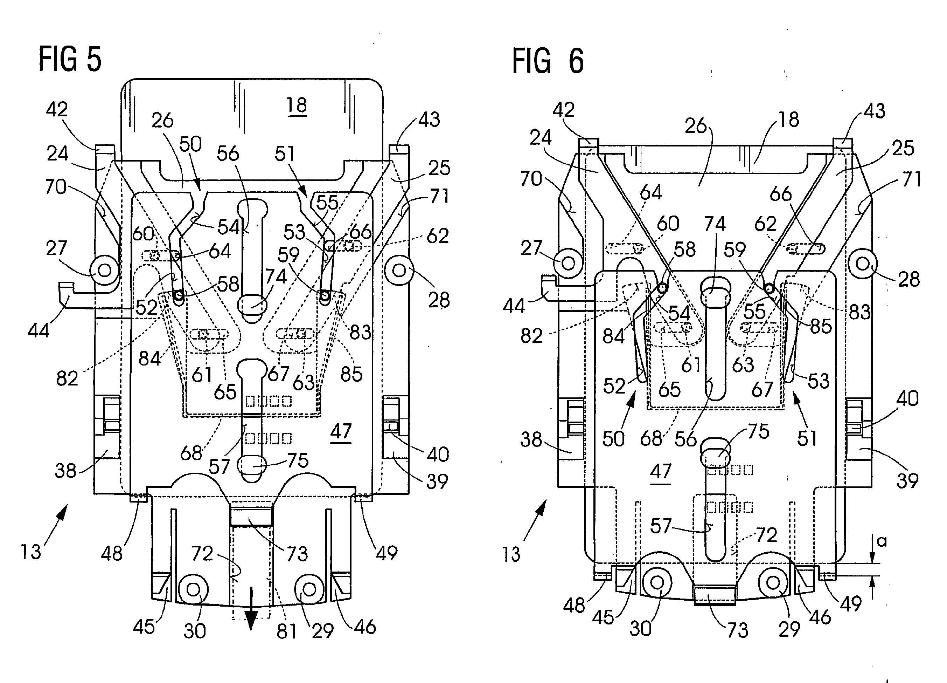

In der Figur 1 ist mit 1 ein Fahrtschreiber bezeichnet, dessen nicht sichtbares Einbaugehäuseteil von einer Frontblende 2 frontseitig abgedeckt ist. Mit 3 ist ein Fensterausschnitt bezeichnet, durch welchen die Anzeige eines Displays 4 lesbar ist. Ferner sind mehrere Tasten 5,6,7 und 8 aus der Frontblende 2 herausgeführt. Dabei dienen die Tasten 5 und 8 dem Anmelden von Fahrer und Beifahrer, die Tasten 6 und 7 in Kombination mit den Tasten 5 und 8 u.a. dem Freigeben der jeweiligen, Fahrer und Beifahrer zugeordneten persönlichen Chipkarten. Mit einer Abdeckung 9 ist eine Diagnosezwecken dienende Steckerfassung verschlossen. In der Frontblende 2 angebrachte, z.T. trichterförmig angesenkte Führungsschlitze 10 und 11 dienen dem Vororientieren beim Eingeben der Chipkarten von Fahrer und Beifahrer in die jeweiligen, in dem Einbaugehäuseteil befindlichen, vorzugsweise einer Leiterplatte 12 (Figur 6) zugeordneten Chipkarten-Aufnahmeaggregate des Fahrtschreibers 1, von denen eines mit der Figur 2 dargestellt und mit 13 bezeichnet ist. Freisparungen 14 und 15 des wulstförmigen Vorsprungs 16 der Frontblende 2 dienen als Eingabemulden dem Vorstecken der Chipkarten 17 und 18 in die jeweiligen Lese-/Schreibpositionen. Ein mit 19 bezeichneter Schlitz ist für den Durchtritt des Druckträgers eines in dem Fahrtschreiber 1 angeordneten Belegdruckers vorgesehen. Eine Taste 20 dient der Druckauslösung. Mit 21 ist eine Plombe bezeichnet, welche eine Verschraubung der Frontblende 2 an dem Einbaugehäuseteil sichert. In der Figur 1 sind außerdem vor den Chipkarten 17, 18 eingeschwenkte, in den Chipkarten-Aufnahmeaggregaten 13 gelagerte Riegelelemente 22, 23 und 24, 25 dargestellt.

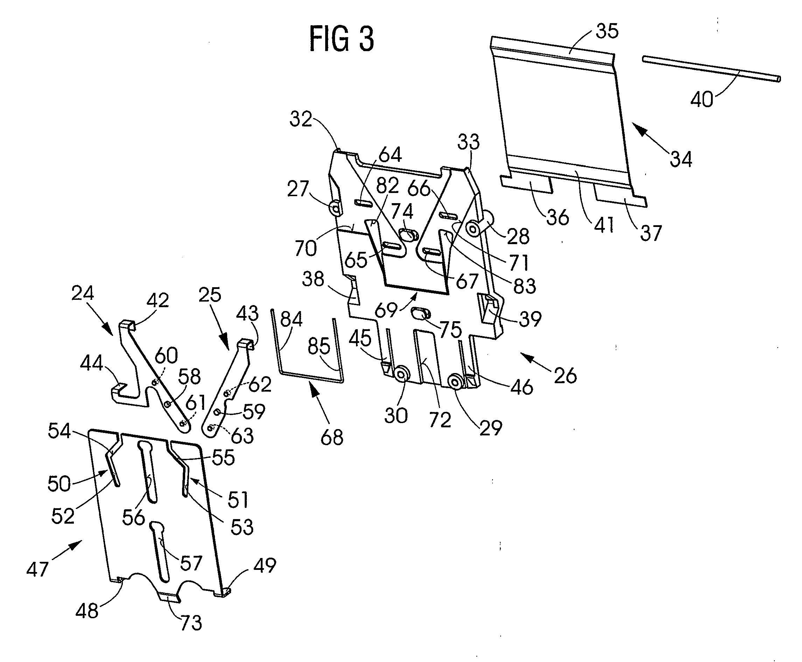

Wie aus der Figur 2 hervorgeht, weist jedes Chipkarten-Aufnahmeaggregat 13 einen die übrigen Bauteile tragenden Kartenhalter 26 auf, an welchem Gewindebolzen 27,28,29 und 30 zur Befestigung des Chipkarten-Aufnahmeaggregates 13, beispielweise an der Leiterplatte 12 angeformt sind. Mit 31 ist ein Boden, mit 32 und 33 sind Seitenwangen der in dem Kartenhalter 26 ausgebildeten, der Chipkarte 18 zugeordneten Führung bezeichnet. Der eigentliche Kartenschacht wird vervollständigt durch einen in die Führung eingreifenden federnden Niederhalter 34, an dem frontseitig eine auf dem Boden 31 aufliegende Ausrichtschiene 35 und rückseitig Halteschenkel 36 und 37 ausgebildet sind. Für die Befestigung bzw. Halterung des Niederhalters 34 auf dem Kartenhalter 26 sind an dem Kartenhalter 26 Lagerschalen 38 und 39 ausgebildet, in denen eine Stange 40 aufgenommen ist, an der sich der mit einer versteifenden Sicke 41 versehenen Niederhalter 34 abstützt. Außerdem zeigt die Figur 2, dass die Enden 42 und 43 der im folgenden noch näher zu beschreibenden Riegelelemente 24 und 25 hakenartig ausgebildet sind und somit eine in dem Aufnahmeaggregat 13 befindliche Chipkarte18 frontseitig umgreifen können. Eine an dem einen Riegelelement 24 angeformte Fahne 44 ist Teil einer das Vorhandensein einer Chipkarte 18 im Aufnahmeaggregat 13 meldenden Lichtschranke, deren optische Elemente an der Leiterplatte 12 angeordnet sind. Mit 45 und 46 sind Klinken bezeichnet, die unmittelbar an dem Kartenhalter 26 federnd ausgeformt sind. Die Klinken 45 und 46 dienen der Sicherung des an dem Kartenhalter 26 verschiebbar gelagerten Steuerschiebers 47 (Figur 3), welcher mit Mitnehmern 48 und 49 in den Bewegungsweg einer in dem Aufnahmeaggregat 13 geführten Chipkarte 18 eingreift.

Die Figur 3 zeigt, dass der Steuerschieber 47 im wesentlichen eine Platte darstellt, in welcher spiegelbildlich zu einer Mittellinie Kulissen 50 und 51 ausgebildet sind. Dabei verläuft der eine Kulissenabschnitt 52 bzw. 53 parallel oder nur wenig geneigt zur Mittellinie, der andere Kulissenabschnitt 54 bzw. 55 vorzugsweise unter einem Winkel von 45°. Ferner sind zwei schlüssellochförmige Durchbrüche 56 und 57 vorgesehen, die zur kippfreien Lagerung des Steuerschiebers 47 vorzugsweise in einer Reihe liegen und bezogen auf die Breite des Steuerschiebers 47 mittig ausgebildet sind. Die zwischen dem Steuerschieber 47 und dem Kartenhalter 26 liegenden, flachprofilierten Riegelelemente 24 und 25 sind jeweils mit einem mit einer Kulisse 50 bzw. 51 in Eingriff stehenden Mitnahmestift 58 und 59 versehen. Außerdem sind an den Riegelelementen 24, 25 Führungsstifte 60, 61 und 62, 63 angebracht, denen im Kartenhalter 26 ausgeformte Nute 64, 65 und 66, 67 zugeordnet sind. Mit 68 ist eine u-förmig ausgebildete Schenkelfeder bezeichnet, zu deren Befestigung in dem Kartenhalter 26 ein Spalt 69 freigespart ist. Aussparungen 70 und 71 dienen einem versenkten Anordnen der Riegelelemente 24, 25 an dem Kartenhalter 26. Eine Senkung 72 stellt eine Freisparung für einen motorisch betätigten Stößel dar, der im Falle des Ausgebens der Chipkarte 18 an dem an dem Steuerschieber 47 mittig angeformten Fortsatz 73 angreift. Mit 74 und 75 sind T-förmige, am Kartenhalter 26 ausgebildete Lagerzapfen bezeichnet, die im Zusammenwirken mit den Durchbrüchen 56 und 57 der Lagerung des Steuerschiebers 67 dienen.

Im folgenden sei die Montage des Chipkarten-Aufnahmeaggregates 13 beschrieben. Dabei können die Montage des Niederhalters 34 und die Montage des Steuerschiebers 47 völlig unabhängig voneinander erfolgen, die beiden Bauteile somit auch unabhängig voneinander ausgetauscht werden. Bei der Montage des Steuerschiebers 47 wird zunächst die Schenkelfelder 68 in den im Kartenhalter 26 ausgebildeten Spalt 69 eingepresst und gegebenenfalls verstemmt. Danach werden die Riegelelemente 24, 25 in die Aussparungen 70, 71 lose eingelegt wobei die Führungsstifte 60, 61 und 62, 63 in die jeweiligen Nute 64, 65 und 66, 67 eingreifen und die Schenkel der Schenkelfeder 68 seitlich an den Riegelelementen 24, 25 anliegen. Beim nachfolgenden bajonettartigen Aufsetzen des Steuerschiebers 47 auf den Kartenhalter 26 derart, dass die Mitnehmer 48, 49 gegen den Kartenhalter 26 weißen, hintergreifen im Zusammenwirken mit den Durchbrüchen 56, 57 die Lagerzapfen 74, 75 den Steuerschieber 47 und die Mitnahmestifte 58, 59 der Riegelelemente 24, 25 stehen in Eingriff mit den Kulissen 50, 51. Der Vollständigkeit halber sei noch erwähnt, dass beim Aufsetzen des Steuerschiebers 47 auf den Kartenhalter 26 ein Verschwenken der Klinken 45, 46 erfolgt. Nach einem kurzen Verschiebeweg rasten die Klinken 45, 46 in die Bewegungsebene des Steuerschiebers 47 zurück, d.h. der Steuerschieber 47 ist unverlierbar an dem Kartenhalter 26 gehaltert und die lose zwischen dem Kartenhalter 26 und dem Steuerschieber 47 angeordneten Riegelelemente 24,25 in ihrem Bewegungsraum mittels des Steuerschiebers 47 gesichert. Dabei lässt sich die zweistellige Lagerung 56/ 74 und 57/ 75 des Steuerschiebers 47 derart gestalten, dass der Steuerschieber 47 weitgehend spielfrei gelagert und auch ein Verkanten des Steuerschiebers 47 ausgeschlossen ist. Die Montage des als Blattfeder ausgebildeten Niederhalters 34 erfolgt in einfacher Weise durch Auflegen des Niederhalters 34 auf den Kartenhalter 26 und im Zusammenwirken mit der an dem Niederhalter ausgebildeten Sicke 41 durch Einrasten der Stange 40 in die Lagerschalen 38, 39. Dabei erfolgt der Zugang zu den Lagerschalen 38, 39 durch an den Lagerschalen 38, 39 seitlich freigesparte Einführöffnungen 76 und 77.

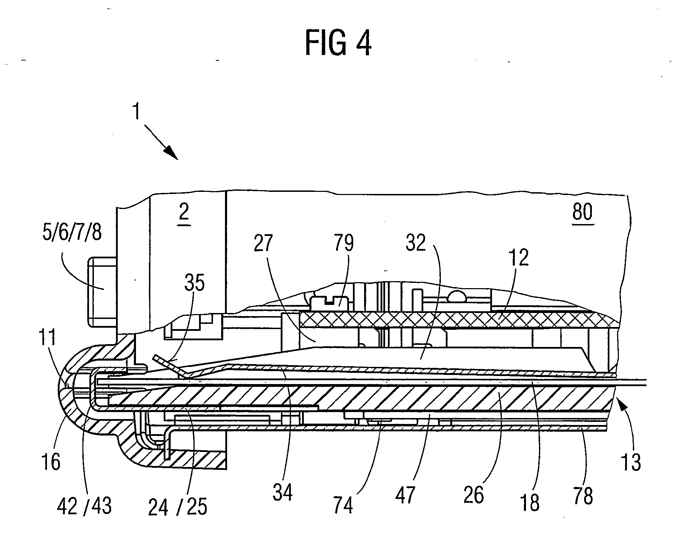

Mit der Figur 4 soll insbesondere die Zuordnung der Chipkarten-Aufnahmeaggregate 13 zur Leiterplatte 12, zur Frontblende 2 und zum Bodenblech 78 des Einbaugehäuseteils des Fahrtschreibers 1 veranschaulicht werden. Die Figur 4 zeigt, dass das extrem flach gebaute erfindungsgemäße Chipkarten-Aufnahmeaggregat 13 eine relativ geringe Bauhöhe zwischen dem Bodenblech 78 des Fahrtschreibers 1 und der Eingabeebene der Chipkarte 18 ermöglicht und somit die knappe Bauhöhe des Fahrtschreibers 1 besser genutzt werden kann. Dabei dienen die auf die dem Steuerschieber 47 zugeordnete Seite des Kartenhalters 26 verlängerten Gewindebolzen 27, 28, 29, 30 als Abstandshalter gegenüber dem Bodenblech 78. Mit 79 ist eine der Schrauben bezeichnet, mit denen das Chipkarten-Aufnahmeaggregat 13 an der Leiterplatte 12 befestigt ist. 80 stellt eine Seitenwand das Einbaugehäuseteils des Fahrtschreibers 1 dar.

Mit den Figuren 5 und 6 sei nachfolgend die Funktion des erfindungsgemäßen Chipkarten-Aufnahmeaggregates 13, das in Fahrtschreibern im allgemeinen zweimal Anwendung findet, erläutert. Die Figuren 5 und 6 zeigen, bezogen beispielweise auf die Figur 2, Untersichten mit jeweils einer Grenzstellung der Funktionselemente. Bei der Funktionsdarstellung, Figur 5, befindet sich die Chipkarte 18 in der Entnahmeposition, in die sie mittels des Steuerschiebers 47 bzw. der an dem Steuerschieber 47 ausgebildeten Mitnehmer 48, 49 verschoben wurde. Dabei wirkte auf den Steuerschieber 47 ein am Fortsatz 73 angreifender motorisch bewegter Stößel 81 ein, der nach dem Verschieben der Chipkarte 18 in die Entnahmeposition wieder in eine Ausgangslage zurück- geführt wurde, so dass das Chipkarten-Aufnahmeaggregat 13 für eine erneute Eingabe der Chipkarte 18 oder bei einem Fahrer-/Beifahrerwechsel für die Eingabe der Chipkarte 17 frei ist.

In diesem Funktionszustand befinden sich die Riegelelemente 24,25 bzw. deren Enden 42,43 außerhalb des durch den in der Frontblende 2 befindlichen Führungsschlitz 11 und den am Kartenhalter 26 ausgebildeten Kartenschacht begrenzten Bewegungsraum der Chipkarte 18. Gleichzeitig sind die an den Riegelelementen 24, 25 angreifenden, in Vertiefungen 82 und 83 der Aussparungen 70, 71 sich bewegenden Schenkel 84 und 85 der Schenkelfeder 68 weitgehend, d.h. bis auf jeweils einen relativ geringen, durch die Kulissenabschnitte 52 und 53 bedingten Hub ausgelenkt und somit gespannt und der Steuerschieber 47 liegt aufgrund der zur Führung des Steuerschiebers 47 nicht parallel verlaufenden Kulissenabschnitte 52, 53 unter der Wirkung der Schenkel 84, 85 der Schenkelfeder 68 über die Mitnehmer 48, 49 an dem Kartenhalter 26 an.

Wird im Gegensatz hierzu bei der "Offenstellung" des Chipkarten-Aufnahmeaggregates 13 eine Chipkarte 18 in den aus dem Boden 31 und den Seitenwangen 32, 33 des Kartenhalters 26 sowie dem Niederhalter 34 gebildeten Kartenschacht eingeführt, so wird beim Erreichen des Funktionszustandes gemäß Figur 5 der Steuerschieber 47 von der Chipkarte 18 über die Mitnehmer 48, 49 bis zum Anschlagen der Chipkarte 18 an einem nicht dargestellten, an der Leiterplatte 12 oder an dem der Chipkarte 18 zugeordneten Kontaktsatz angeordneten Anschlag mitgenommen, wobei die Lage der Chipkarte 18 an diesem Anschlag, d.h. die Lage der Chipkarte 18 in der Schreib-/Leseposition durch ein Signal einer mittels der Fahne 44 gesteuerten Lichtschranke gemeldet wird. Während der Mitnahme des Steuerschiebers 47 erfolgt beim Eintreten der Mitnahmestifte 58, 59 in die Kulissenabschnitte 54, 55 ein Verschieben der Riegelelemente 24, 25 derart, dass die hakenförmigen Enden 42, 43 der Riegelelemente die Stirnfläche der Chipkarte 18 umgreifen. Dabei kann, wie aus der Figur 6 hervorgeht, die Abstimmung der getrieblich miteinander gekoppelten Bauteile derart getroffen sein, dass die Riegelelemente 24, 25 die am Anschlag liegende Chipkarte 18 weitgehend spielfrei umgreifen und auf diese Weise die Chipkarte 18 in der Lese-/Schreibposition sichern. Dies bedeutet, dass der Steuerschieber 47 einen Überhub "a" ausführen muss damit beim Ausgeben der Chipkarte 18 durch den Stößel 81 zunächst die Riegelelemente 24, 25 verschoben werden können und erst danach die Chipkarte 18 über die Mitnehmer 48, 49 mitgenommen wird. Dies bedeutet ferner, dass die Schenkelfeder 68 derart ausgebildet sein muss, dass sie unabhängig vom Einschieben der Chipkarte 18 in die Lese-/Schreibposition in der Lage sein muss, selbsttätig den Überhub des Steuerschiebers 47 zu bewirken und dabei die Riegelelemente 24, 25 vor die Chipkarte 18 zu verschieben. Umgekehrt ist zwischen den Riegelelementen 24, 25 und der am Anschlag befindlichen Chipkarte 18 ausreichend Abstand erforderlich, um bei dem gleichzeitig folgenden Ausschieben der Chipkarte 18 und Verschieben der Riegelelemente 24, 25 eine Kollision zu vermeiden. Da die Chipkarte 18 an sich durch den Niederhalter 34 ausreichend in der Lese-/Schreibposition fixiert, ist lässt sich in diesem Falle die Schenkelfeder 68 derart ausbilden, dass sie für die Schwingungssicherung der Riegelelemente 24, 25 und des Steuerschiebers 47 ausreicht, gegebenenfalls kann auf die Schenkelfelder 68 auch verzichtet werden.

## Patentansprüche

1. Chipkarten-Aufnahmeaggregat mit einem die Chipkarten führenden Kartenhalter und mit beim Eingeben einer Chipkarte in das Aufnahmeaggregat mittels der Chipkarte betätigbaren Verriegelungsmitteln,
**dadurch gekennzeichnet,**
**dass** an dem Kartenhalter (26) ein plattenförmiger, mittels einer Chipkarte (18) verschiebbarer Steuerschieber (47) gelagert ist und
**dass** der Steuerschieber (47) getrieblich mit wenigstens einem auf dem Kartenhalter (26) gelagertem Riegelelement (24 und 25) in Eingriff steht, wobei das Riegelelement (24 oder 25) derart ausgebildet und gelagert ist, dass es in einer Ebene parallel zur Bewegungsebene des Steuerschiebers (47) bewegbar ist und mit einer angeformten Zunge in die Bewegungsebene der Chipkarte (18) eingreift.

2. Chipkarten-Aufnahmeaggregat nach Anspruch 1,
**dadurch gekennzeichnet,**
**dass** das Riegelelement (24 oder 25) als im wesentlichen flachprofiliertes Bauteil ausgebildet ist, an dessen einem Ende (42 und 43) die Zunge angeformt ist,
**dass** an dem Riegelelement (24 oder 25) Mittel zur Lagerung auf dem Kartenhalter (26) vorgesehen sind und
**dass** das Riegelelement (24 oder 25) mit einem Mitnahmestift (58 oder 59) versehen ist, welchem eine in dem Steuerschieber ausgebildete Kulisse (50 oder 51) zugeordnet ist.

3. Chipkarten-Aufnahmeaggregat nach Anspruch 1,
**dadurch gekennzeichnet,**
**dass** zwei Riegelelemente (24, 25) vorgesehen sind und
**dass** in dem Steuerschieber (47) ausgebildete, jeweils einem Riegelelement (24, 25) zugeordnete Kulissen (50, 51) derart gestaltet sind, dass die Riegelelemente (24, 25) bei einer Bewegung des Steuerschiebers (47) gegenläufige Bewegungen ausführen.

4. Chipkarten-Aufnahmeaggregat nach Anspruch 1,
**dadurch gekennzeichnet,**
**dass** die Riegelelemente (24, 25) zwischen dem Kartenhalter (26) und dem Steuerschieber (47) in in dem Kartenhalter (26) ausgebildeten Aussparungen (70,71)schwenkbar oder quer zur Bewegungsrichtung des Steuerschiebers (47) verschiebbar gelagert sind.

5. Chipkarten-Aufnahmeaggregat nach Anspruch 1,
**dadurch gekennzeichnet,**
**dass** jedem Riegelelement (24, 25) ein Federelement zugeordnet ist.

6. Chipkarten-Aufnahmeaggregat nach Anspruch 5,
**dadurch gekennzeichnet,**
**dass** eine im wesentlichen u-förmige Schenkelfeder (68) vorgesehen ist,
**dass** die Schenkelfeder (68) am Kartenhalter(26) befestigt ist und
**dass** die Schenkel der Schenkelfeder (68) jeweils in eine der Aussparungen (70, 71) des Kartenhalters (26) eingreifen.

7. Chipkarten-Aufnahmeaggregat nach Anspruch 1,
**dadurch gekennzeichnet,**
**dass** das eine Ende (42, 43) eines Riegelelementes (24, 25) derart hakenartig ausgebildet ist, dass es eine in der Lese-/Schreibposition befindliche Chipkarte (18) stirnseitig umgreift.

8. Chipkarten-Aufnahmeaggregat nach Anspruch 4,
**dadurch gekennzeichnet,**
**dass** jedes Riegelelement (24, 25) mit auf der Gegenseite des Mitnahmestiftes (58, 59) angebrachten Führungsstiften (60, 61 und 62, 63) versehen ist und
**dass** in dem Kartenhalter (26) den Führungsstiften (60, 61 und 62, 63) zugeordnete Nute (64, 65 und 66, 67)ausgebildet sind derart, dass die Riegelelemente (24, 25) quer zur Bewegungsrichtung des Steuerschiebers (47) bewegbar sind.

9. Chipkarten-Aufnahmeaggregat nach Anspruch 1,
**dadurch gekennzeichnet,**
**dass** für die Montage und die Lagerung des Steuerschiebers (47) auf dem Kartenhalter (26) Renkverbindungsmittel (56, 74 und 57, 75) vorgesehen sind.

10. Chipkarten-Aufnahmeaggregat nach Anspruch 9,
**dadurch gekennzeichnet,**
**dass** an dem Kartenhalter (26) wenigstens eine die Verbindung zwischen dem Kartenhalter (26) und dem Steuerschieber (47) sichernde, federnde Klinke (45, 46) ausgebildet ist.

11. Chipkarten-Aufnahmeaggregat nach Anspruch 9,
**dadurch gekennzeichnet,**
**dass** in dem Steuerschieber (47) wenigstens ein der Renkverbindung mit dem Kartenhalter (26) dienender Durchbruch (56, 57) im wesentlichen mittig zu den spiegelbildlich vorgesehenen, den Riegelelementen (24, 25) zugeordneten Kulissen (50, 51) ausgebildet ist.

12. Chipkarten-Aufnahmeaggregat nach Anspruch 2,
**dadurch gekennzeichnet,**
**dass** die den Riegelelementen (24, 25) zugeordneten Kulissen (45, 46) derart ausgebildet sind, dass die hakenartig ausgebildeten Enden (42, 43) der Riegelelemente (24, 25) bei einer in Lese-/Schreibposition befindlichen Chipkarte (18) unter der Wirkung der Schenkelfelder (68) an der Chipkarte (18) stirnseitig anliegen.

13. Chipkarten-Aufnahmeaggregat nach Anspruch 9,
**dadurch gekennzeichnet,**
**dass** das dem Kartenhalter (26) zugeordnete Renkverbindungsmittel (74, 75) als ein im Querschnitt quer zur Bewegungsrichtung des Steuerschiebers (47) T-förmiger Lagerzapfen ausgebildet ist.

14. Chipkarten-Aufnahmeaggregat nach Anspruch 11,
**dadurch gekennzeichnet,**
**dass** in dem Steuerschieber (47) zwei in Richtung der Bewegung des Steuerschiebers (47) in einer Reihe liegende Durchbrüche (56, 57) vorgesehen sind und
**dass** an dem Kartenhalter (26) den Durchbrüchen (56, 57) entsprechende T-förmige Lagerzapfen (74, 75) ausgebildet sind.

15. Chipkarten-Aufnahmeaggregat nach Anspruch 2,
**dadurch gekennzeichnet,**
**dass** die Kulissen (50, 51) derart ausgebildet sind, dass der Steuerschieber (47) in der Entnahme-/ Eingabestellung verrastbar ist.

16. Chipkarten-Aufnahmeaggregat nach Anspruch 5,
**dadurch gekennzeichnet,**
**dass** die Renkverbindungsmittel (56, 74 und 57, 75) zwischen den Kartenhalter (26) und dem Steuerschieber (47) einerseits sowie die Führungs- und Antriebsmittel (60, 61/ 64, 65/ 70 und 50, 58 bzw. 62, 63/ 66, 67/ 71 und 51,59) der Riegelelemente (24, 25) anderseits derart ausgebildet sind, dass beim Anschlagen einer Chipkarte (18) in der Lese-/Schreibposition der Steuerschieber (47) unter der Wirkung der Schenkelfeder (68) einen Überhub ausführt.

## Claims

1. Chipcard-accommodating unit having a card holder which guides the chipcards, and having locking means which can be actuated by means of a chipcard when the latter is introduced into the accommodating unit, **characterized in that** a plate-like control slide (47), which can be displaced by means of a chipcard (18), is mounted on the card holder (26), and **in that** the control slide (47) engages, in terms of gearing, with at least one locking element (24 and 25) mounted on the card holder (26), the locking element (24 or 25) being designed, and mounted, such that it can be moved in a plane parallel to the movement plane of the control slide (47) and engages, by way of an integrally formed tongue, in the movement plane of the chipcard (18).

2. Chipcard-accommodating unit according to Claim 1, **characterized in that** the locking element (24 or 25) is designed as a component which has an essentially flat profile and at one end (42 and 43) of which the tongue is integrally formed, **in that** the locking element (24 or 25) has means provided for mounting it on the card holder (26), and **in that** the locking element (24 or 25) is provided with a carry-along pin (58 or 59), which is assigned a guide slot (50 or 51) formed in the control slide.

3. Chipcard-accommodating unit according to Claim 1, **characterized in that** two locking elements (24, 25) are provided, and **in that** guide slots (50, 51), which are formed in the control slide (47) and are each assigned to a locking element (24, 25), are configured such that the locking elements (24, 25) move in opposite directions when the control slide (47) is moved.

4. Chipcard-accommodating unit according to Claim 1, **characterized in that** the locking elements (24, 25) are mounted, between the card holder (26) and the control slide (47), in recesses (70, 71), formed in the card holder (26), such that they can be pivoted or displaced transversely to the movement direction of the control slide (47).

5. Chipcard-accommodating unit according to Claim 1, **characterized in that** each locking element (24, 25) is assigned a spring element.

6. Chipcard-accommodating unit according to Claim 5, **characterized in that** an essentially u-shaped leg spring (68) is provided, **in that** the leg spring (68) is fastened on the card holder (26), and **in that** the legs of the leg spring (68) each engage in one of the recesses (70, 71) of the card holder (26).

7. Chipcard-accommodating unit according to Claim 1, **characterized in that** one end (42, 43) of a locking element (24, 25) is designed in a hook-like manner such that it engages around the end side of a chipcard (18) located in the reading/writing position.

8. Chipcard-accommodating unit according to Claim 4, **characterized in that** each locking element (24, 25) is provided with guide pins (60, 61 and 62, 63) which are fitted on the opposite sides of the carry-along pin (58, 59), and **in that** grooves (64, 65 and 66, 67) assigned to the guide pins (60, 61 and 62, 63) are formed in the card holder (26) such that the locking elements (24, 25) can be moved transversely to the movement direction of the control slide (47).

9. Chipcard-accommodating unit according to Claim 1, **characterized in that** bayonet-type connecting means (56, 74 and 57, 75) are provided for installing the control slide (47) and mounting it on the card holder (26).

10. Chipcard-accommodating unit according to Claim 9, **characterized in that** at least one resilient catch (45, 46) is formed on the card holder (26), this catch securing the connection between the card holder (26) and the control slide (47).

11. Chipcard-accommodating unit according to Claim 9, **characterized in that** the control slide (47) contains at least one aperture (56, 57), which is used for the bayonet-type connection to the card holder (26), essentially centrally in relation to the mirror-inverted guide slots (50, 51), which are assigned to the locking elements (24, 25).

12. Chipcard-accommodating unit according to Claim 2, **characterized in that** the guide slots (50, 51), which are assigned to the locking elements (24, 25), are designed such that the hook-like ends (42, 43) of the locking elements (24, 25) butt against the end side of the chipcard (18), under the action of the leg spring (68), when the chipcard (18) is located in the reading/writing position.

13. Chipcard-accommodating unit according to Claim 9, **characterized in that** the bayonet-type connecting means (74, 75) assigned to the card holder (26) is designed as a T-shaped bearing journal in cross section transverse to the movement direction of the control slide (47).

14. Chipcard-accommodating unit according to Claim 11, **characterized in that** the control slide (47) contains two apertures (56, 57) which are located in a row in the direction of the movement of the control slide (47), and **in that** T-shaped bearing journals (74, 75) corresponding to the apertures (56, 57) are formed on the card holder (26).

15. Chipcard-accommodating unit according to Claim 2, **characterized in that** the guide slots (50, 51) are designed such that the control slide (47) can be latched in the removal/introduction position.

16. Chipcard-accommodating unit according to Claim 5, **characterized in that** the bayonet-type connecting means (56, 74 and 57, 75) between the card holder (26) and the control slide (47), on the one hand, and the guide and drive means (60, 61/64, 65/70 and 50, 58 and also 62, 63/66, 67/71 and 51, 59) of the locking elements (24, 25), on the other hand, are designed such that, when a chipcard (18) strikes against a stop in the reading/writing position, the control slide (47) executes a degree of overtravel under the action of the leg spring (68).

## Revendications

1. Unité de réception de cartes à puce ayant un support de carte transportant les cartes à puce et des moyens de verrouillage pouvant être actionnés par la carte à puce lors de l'insertion d'une carte à puce dans l'unité de réception de cartes à puce,
**caractérisée par le fait**
**qu'**un tiroir de commande (47) en forme de plaque pouvant être repoussé au moyen d'une carte à puce (18) est monté sur le support de carte (26) et
**que** le tiroir de commande (47) est en prise d'entraînement avec au moins un organe de verrouillage (24 et 25) monté sur le support de carte (26), l'organe de verrouillage (24 ou 25) étant configuré et suspendu de manière telle qu'il est mobile dans un plan parallèle au plan de déplacement du tiroir de commande (47) et intervient par une languette qui y est ménagée dans le plan de déplacement de la carte à puce (18).

2. Unité de réception de cartes à puce selon la revendication 1,
**caractérisée par le fait**
**que** l'organe de verrouillage (24 ou 25) est conçu comme composant pour l'essentiel à profil plat, sur l'une extrémité (42 et 43) duquel est ménagée la languette,
**que**, sur l'organe de verrouillage (24 ou 25), sont prévus des moyens pour la suspension sur le support de carte (26) et
**que** l'organe de verrouillage (24 ou 25) est doté d'un taquet d'entraînement (58 ou 59) auquel correspond une coulisse (50 ou 51) ménagée dans le tiroir de commande.

3. Unité de réception de cartes à puce selon la revendication 1,
**caractérisée par le fait**
**qu'**il est prévu deux organes de verrouillage (24, 25) et
**que** des coulisses (50, 51), ménagées dans le tiroir de commande (47) et correspondant chacune à un organe de verrouillage (24, 25), sont conçues de manière telle que les organes de verrouillage (24, 25) exécutent, lors d'un mouvement du tiroir de commande (47) des déplacements en sens inverse.

4. Unité de réception de cartes à puce selon la revendication 1,
**caractérisée par le fait**
**que** les organes de verrouillage (24, 25) sont suspendus, entre le support de carte (26) et le tiroir de commande (47), pivotants dans des évidements (70, 71) ménagés dans le support de carte (26) ou coulissants perpendiculairement à la direction de déplacement du tiroir de commande (47).

5. Unité de réception de cartes à puce selon la revendication 1,
**caractérisée par le fait**
**qu'**un organe à ressort est affecté à chaque organe de verrouillage (24, 25).

6. Unité de réception de cartes à puce selon la revendication 5,
**caractérisée par le fait**
**qu'**il est prévu un ressort à branches (68), pour l'essentiel, en forme de U,
**que** le ressort à branches (68) est fixé au support de carte (26) et
**que** les branches du ressort à branches (68) s'introduisent chacune dans l'un des évidements (70, 71) du support de carte (26).

7. Unité de réception de cartes à puce selon la revendication 1,
**caractérisée par le fait**
**que** l'une des extrémités (42, 43) d'un organe de verrouillage (24, 25) est conçue en forme de crochet de manière telle qu'elle agrippe sur sa face de tranche une carte à puce (18) se trouvant dans la position de lecture et écriture.

8. Unité de réception de cartes à puce selon la revendication 4,
**caractérisée par le fait**
**que** chaque organe de verrouillage (24, 25) est doté de broches de guidage (60, 61 et 62, 63) placées du côté opposé au taquet d'entraînement (58, 59) et
**que**, dans le support de carte (26), des rainures (64, 65 et 66, 67) correspondant aux broches de guidage (60, 61 et 62, 63) sont ménagées de manière telle que les organes de verrouillage (24, 25) sont mobiles perpendiculairement à la direction de déplacement du tiroir de commande (47).

9. Unité de réception de cartes à puce selon la revendication 1,
**caractérisée par le fait**
**que**, pour le montage et la suspension du tiroir de commande (47), des moyens de liaison à baïonnette (56, 74 et 57, 75) sont prévus sur le support de carte (26).

10. Unité de réception de cartes à puce selon la revendication 9,
**caractérisée par le fait**
**que**, sur le support de carte (26), est ménagé au moins un cliquet élastique (45, 46) assurant le lien entre le support de carte (26) et le tiroir de commande (47).

11. Unité de réception de cartes à puce selon la revendication 9,
**caractérisée par le fait**
**que**, dans le tiroir de commande (47), il est prévu au moins un trou (56, 57), disposé, pour l'essentiel, au milieu entre les coulisses (50, 51) prévues inversées l'une par rapport à l'autre et correspondant aux organes de verrouillage (24, 25), et servant à établir le lien à baïonnette avec le support de carte (26).

12. Unité de réception de cartes à puce selon la revendication 2,
**caractérisée par le fait**
**que** les coulisses (45, 46) correspondant aux organes de verrouillage (24, 25) sont conçues de manière telle que les extrémités (42, 43) du type crochet des organes de verrouillage (24, 25) sont appliquées, sous l'effet du ressort à branche (68), sur la face de tranche de la carte à puce (18) lorsqu'une carte à puce (18) se trouve dans la position de lecture et écriture.

13. Unité de réception de cartes à puce selon la revendication 9,
**caractérisée par le fait**
**que** le moyen de liaison à baïonnette (74, 75) correspondant au support de carte (26) est conçu sous la forme d'un pivot de suspension en forme de T perpendiculaire en section transversale à la direction de déplacement du tiroir de commande (47).

14. Unité de réception de cartes à puce selon la revendication 11,
**caractérisée par le fait**
**qu'**il est prévu, dans le tiroir de commande (47), deux trous (56, 57) se trouvant sur une ligne dans la direction de déplacement du tiroir de commande (47) et
**que** des pivots de suspension (74, 75) en forme de T correspondant aux trous (56, 57) sont ménagés sur le support de carte (26).

15. Unité de réception de cartes à puce selon la revendication 2,
**caractérisée par le fait**
**que** les coulisses (50, 51) sont conçues de telle manière que le tiroir de commande (47) est encliquetable dans la position de restitution et la position d'insertion.

16. Unité de réception de cartes à puce selon la revendication 5,
**caractérisée par le fait**
**que** les moyens de liaison à baïonnette (56, 74 et 57, 75) entre le support de carte (26) et le tiroir de commande (47), d'une part, ainsi que entre les moyens de guidage et d'entraînement (60, 61 / 64, 65 / 70 et 50, 58 et, respectivement, 62, 63 / 66, 67 / 71 et 51, 59) des organes de verrouillage (24, 25), d'autre part, sont conçus de manière telle que, lorsqu'une carte à puce (18) arrive à la butée dans la position de lecture et écriture, le tiroir de commande (47) exécute, sous l'effet du ressort à branches (68), un dépassement de course.
